# EUROPEAN PATENT SPECIFICATION

(11) **EP 1 800 908 B1**
(45) Date of publication and mention of the grant of the patent: **09.09.2009**
(21) Application number: 06022334.4
(22) Date of filing: 25.10.2006
(51) Int. Cl.: B60C 13/00

(54) **Pneumatic tire**
Luftreifen
Bandage pneumatique

(30) Priority: 20.12.2005 JP 2005366295
(43) Date of publication of application: 27.06.2007
(73) Proprietor: SUMITOMO RUBBER INDUSTRIES, LTD., Kobe-shi, Hyogo 651-0072 (JP)
(72) Inventor: Tanihara, Itsuo, Chuo-ku Kobe-shi Hyogo 651-0072 (JP); Shibata, Takayuki, Chuo-ku Kobe-shi Hyogo 651-0072 (JP); Oohigashi, Hiroshi, Chuo-ku Kobe-shi Hyogo 651-0072 (JP)
(74) Representative: Manitz, Finsterwald & Partner GbR

(56) References cited:
- EP-A- 1 564 030
- DE-A1- 19 909 648
- US-A1- 2001 010 245

## Description

### BACKGROUND OF THE INVENTION

### Field of the Invention

The present invention relates to a pneumatic tire to be attached to a racing kart and the like according to the preamble of claim 1. The features of the preamble of claim 1 are known from DE-A-199 09 648.

### Description of the Related Art

To a racing kart, a tire having an outside diameter of equal to or less than 350 mm and an aspect ratio of equal to or less than 0.5 is attached. Since the racing kart has a low center of gravity and a light weight, the kart corners at a very high speed. To a tire for the racing kart, a very great force in a lateral direction is applied. In order to shorten a lap time, a great lateral stiffness and an excellent stability are required of the tire for the racing kart. In the tire, a great lateral stiffness is achieved by a sidewall. The sidewall is formed by a crosslinked rubber.

The lateral stiffness is also important to a tire for a passenger car or a truck. A variety of arts for a sidewall to obtain a great lateral stiffness have been proposed. Japanese Laid-Open Patent Publication No. 2002-103923 has disclosed a tire wherein a sidewall has a reinforce layer which includes a cord. Japanese Laid-Open Patent Publication No. 6-199114 has disclosed a tire wherein a canvas is attached on a surface of a sidewall.

To achieve a great lateral stiffness, a rubber of a sidewall requires a certain thickness. However, a tire with a thick sidewall is heavy. The tire is unfavorable in respect of a mileage. The heavy tire is also unfavorable in respect of a lap time at a kart race.

To produce a tire with a sidewall which has a rubber layer and a reinforce layer, it requires a lot of time and troubles. In addition, the tire costs a lot.

The object of the present invention is to provide a pneumatic tire which has a great stiffness and can be obtained at a low price.

### SUMMARY OF THE INVENTION

A pneumatic tire according to the present invention comprises a tread having an outer surface which forms a tread surface, a pair of sidewalls extending almost inwardly in a radial direction from both ends of the tread, a pair of beads extending further almost inwardly in the radial direction from the sidewalls and a carcass laid between the beads on both sides along the insides of the tread and the sidewalls. The sidewall is formed by a side ply including a fiber and a rubber which covers the fiber. The side ply is constituted by multiple cords which are formed by a fiber and are all parallel with each other and a topping rubber which covers the cords. In this tire, a sufficient stiffness is achieved by the side ply. The tire is excellent in handling stability. The tire is obtained at a low price.

It is preferred that a polyester fiber, a polyethylene naphthalate fiber (PEN), a nylon fiber or an aramid fiber is used for the side ply. It is preferred that a length of the side ply in the radial direction is equal to or greater than 50% of a height of the tire.

It is preferred that the cord is inclined to a rotation direction of the tire. It is preferred that an angle of inclination of the cord in the sidewall at one side to the rotation direction of the tire is substantially equal to an angle of inclination of the cord in the side wall at the other side to the rotation direction of the tire.

### BRIEF DESCRIPTION OF THE DRAWINGS

Fig. 1 is a sectional view showing a part of a tire according to an embodiment of the present invention,
Fig. 2 is a sectional view showing a part of a side ply of the tire in Fig. 1,
Fig. 3 is a partially cut off cross-sectional view of the tire in Fig. 1,
Fig. 4 is a sectional view showing a part of a tire which is not a part of the present invention, and
Fig. 5 is a sectional view showing a part of a tire according to a further embodiment of the present invention.

### DESCRIPTION OF THE PREFERRED EMBODIMENTS

The present invention will be described below in detail based on preferred embodiments with reference to the drawings.

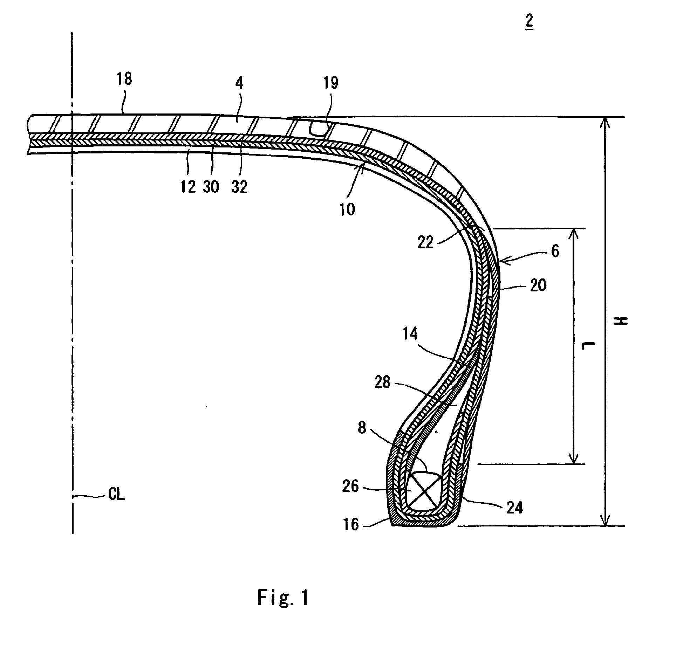

In Fig. 1, a vertical direction is set to be a radial direction of a tire 2 and a transverse direction is set to be an axial direction of the tire 2. The tire 2 takes an almost symmetrical shape about a one-dotted chain line CL in Fig. 1. The one-dotted chain line CL indicates an equator plane of the tire 2. The tire 2 comprises a tread 4, a sidewall 6, a bead 8, a carcass 10, an inner liner 12, a reinforce ply 14 and a chafer 16. The tire 2 is a tubeless pneumatic tire. The tire 2 is attached to a racing kart.

The tread 4 is formed by a crosslinked rubber and has a shape of an arc which is outwardly convex in the radial direction. An outer surface of the tread 4 constitutes a tread surface 18 which comes in contact with a road surface. On the tread surface 18, a groove 19 is carved. By carving the groove 19, a tread pattern is formed. The groove 19 may not be formed on the tread 4.

The sidewall 6 extends almost inwardly in the radial direction from an end of the tread 4. The sidewall 6 bends to absorb a shock from the road surface. In addition, the sidewall 6 prevents an external damage to the carcass 10. The sidewall 6 has a side ply 20. The side ply 20 is layered directly on the carcass 10. The sidewall 6 is formed only by the side ply 20. An upper end 22 of the side ply 20 abuts on the tread 4. A lower end 24 of the side ply 20 overlaps with the chafer 16. The overlapped portion has a distance of about 5 mm to 10 mm. The side ply 20 may be united with the chafer 16.

The bead 8 extends almost inwardly in the radial direction from the sidewall 6. The bead 8 is formed by a core 26 and an apex 28 which extends almost outwardly in the radial direction from the core 26. The core 26 is ring-shaped and formed by a plurality of non-extensible wires (typically, steel wires). The apex 28 is tapered toward the outside in the radial direction, and is formed by a crosslinked rubber.

The carcass 10 is formed by a first carcass ply 30 and a second carcass ply 32. The first carcass ply 30 and the second carcass ply 32 are laid between the beads 8 on both sides along the insides of the tread 4 and the sidewalls 6. The first carcass ply 30 and the second carcass ply 32 are turned up axially from the inside to the outside around the core 26.

The first carcass ply 30 and the second carcass ply 32 are formed by multiple carcass cords which are parallel with each other and a topping rubber, which is not shown. The carcass cord is inclined to the equator plane CL. An angle of the inclination (absolute value) is 20 degrees or greater and 90 degrees or less. The inclining direction of the cord of the first carcass ply 30 is reverse to that of the cord of the second carcass ply 32. This tire 2 is a so-called bias tire. The carcass may be constituted by a single ply. The carcass may have a radial construction.

The carcass cord is formed by an organic fiber. A typical example of the organic fiber is a nylon fiber. A polyester fiber, a rayon fiber, a polyethylene naphthalate fiber or an aramid fiber may be used for the carcass cord.

The inner liner 12 is bonded to an inner surface of the carcass 10 . The inner liner 12 is formed by a crosslinked rubber. For the inner liner 12, a rubber with a low air permeability is used. The inner liner 12 plays a part in maintasining the internal pressure of the tire 2.

The reinforce ply 14 is located to the inside of the apex 28 in the axial direction. The reinforce ply 14 is formed by a cord and a topping rubber, which is not shown. For the cord, an organic fiber is used. Examples of a preferable organic fiber include a nylon fiber, a polyester fiber, a rayon fiber, a polyethylene naphthalate fiber and an aramid fiber. A metal cord may be used instead of the organic fiber. A typical metal cord is a steel cord. The reinforce ply 14 may be located to the outside of the apex 28 in the axial direction.

The chafer 16 is located in the vicinity of the bead 8. When the tire 2 is fitted to a rim, the chafer 16 abuts on the rim. By the abutment, the vicinity of the bead 8 is protected. The chafer 16 is usually formed by a fabric and a rubber impregnated in the fabric. The chafer 16 formed only by a rubber may also be used.

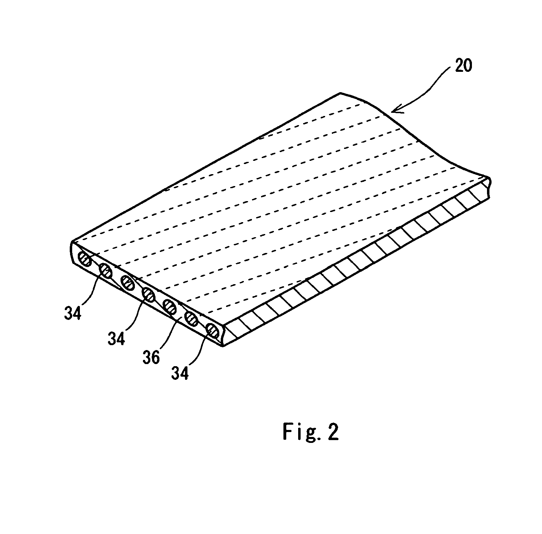

Fig. 2 is a sectional view showing a part of the side ply 20 of the tire 2 in Fig. 1. The side ply 20 is constituted by multiple parallel cords 34 and a topping rubber 36. The cord 34 is covered by the topping rubber 36. All the cords 34 have an almost same diameter.

The cord 34 is preferably formed by an organic fiber. Illustrative examples of a preferable organic fiber include a polyester fiber, a polyethylene naphthalate fiber, a nylon fiber and an aramid fiber. When the carcass cord is formed by a nylon fiber, it is preferred that a polyester fiber or a polyethylene naphthalate fiber is used for the cord 34 of the side ply 20 in the light of stiffness of the tire 2.

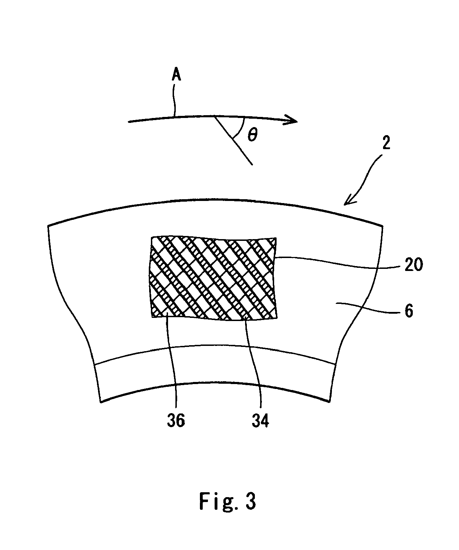

Fig. 3 is a partially cut off cross-sectional view of the tire 2 in Fig. 1. This Fig. 3 shows the tire 2 which is seen from the axial direction. This Fig. 3 shows a cross section of the side ply 20. As mentioned above, the side ply 20 is formed by the cord 34 and the topping rubber 36. What is indicated by an arrowhead A in Fig. 3 is a rotation direction of the tire. The cord 34 is inclined to the rotation direction A. This inclination enhances stiffness of the sidewall 6. What is indicated by a symbol θ in Fig. 3 is an angle formed by the cord 34 being inclined to the rotation direction A. The angle θ is preferably equal to or greater than 5 degrees and more preferably equal to or greater than 10 degrees. The angle θ is preferably equal to or less than 45 degrees and more preferably equal to or less than 40 degrees. It is preferred that the angle θ at one side of the sidewall 6 is substantially equal to the angle θ at the other side of the sidewall 6.

In this tire 2, a great lateral stiffness is achieved by the side ply 20. This tire 2 is excellent in handling stability. This tire 2 does not require a sidewall rubber used in conventional tires. Accordingly, the tire 2 is light and obtained at a low price. To layer the side ply 20 on the carcass 10 is easier than to layer the sidewall rubber on the carcass 10. This tire 2 is also excellent in productivity. In the conventional tires, a defect (e.g. a bare) is easily caused by a flow of the sidewall rubber at steps of vulcanization and molding. On the other hand, as the flow of the rubber of the side ply 20 is less in the tire 2 according to the present invention, the defect is difficult to be caused. In addition, by restraining the flow of the rubber, labels which are attached on a green tire for the purpose of lot management and the like are prevented from being covered by the rubber.

In the light of a lateral stiffness, a fineness of the cord 34 is preferably equal to or greater than 400 dtex, more preferably equal to or greater than 900 dtex. In the light of a following property to a road surface, the fineness of the cord 34 is preferably equal to or less than 2500 dtex.

In the light of a lateral stiffness, a density of the cord 34 (the number of the cords per 5 cm of the side ply) is preferably equal to or greater than 15 ends and more preferably equal to or greater than 20 ends. In the light of a following property to a road surface, the density of the cord 34 is preferably equal to or less than 70 ends. In the light of a lateral stiffness, a product obtained by multiplying the fineness (dtex) and the density (ends) of the cord 34 is preferably equal to or greater than 20000 and more preferably equal to or greater than 25000. In the light of a following property to a road surface, the product is preferably equal to or less than 120000.

What is indicated by a both-sided arrowhead H in Fig. 1 is a height of the tire 2 measured from a bead base line, and what is indicated by a both-sided arrowhead L is a length of the side ply 20 in the radial direction. In the light of a lateral stiffness, a ratio of the length L to the height H is preferably equal to or greater than 50%, more preferably equal to or greater than 60% and particularly preferably equal to or greater than 70%. The ratio is preferably equal to or less than 90%.

In a method of manufacturing the tire 2, first at a preforming step, a carcass ply and the side ply 20 are layered. At the preforming step, a tread rubber and the like are also layered on the carcass ply. At this preforming step, a green tire is obtained. The green tire is placed into a mold and then compressed and heated. The compression and heating result in a flow of the rubber. The heating causes a vulcanization reaction of the rubber. The tire 2 is obtained in this manner.

Before the carcass ply and the side ply 20 are layered, it is preferred that the topping rubber 36 of the side ply 20 is in a half vulcanized state by an electron-ray curing method. By using this side ply 20, the flow of the rubber is restrained at steps of vulcanization and molding. By restraining the flow of the rubber, a defect is decreased. By restraining the flow of the rubber, a spew generated at a vent hole is also restrained. The tire 2 with a small spew is excellent in appearance.

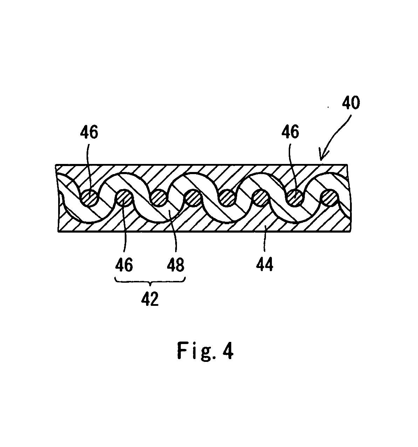

Fig. 4 is a sectional view showing a part of a tire which is not a part of the present invention. This Fig. 4 shows a side ply 40. The structure of this tire excluding the side ply 40 is equal to that of the tire 2 shown in Fig. 1. The side ply 40 is formed by a fabric 42 and a rubber 44 impregnated into the fabric 42. The fabric 42 is covered by the rubber 44.

The fabric 42 is formed by multiple warps 46 and wefts 48. The warp 46 and the weft 48 are formed by an organic fiber. Illustrative examples of the organic fiber include a polyester fiber, a polyethylene naphthalate fiber, a nylon fiber and an aramid fiber. When the carcass cord is formed by a nylon fiber, it is preferred that a polyester fiber or a polyethylene naphthalate fiber is used for the warp 46 and the weft 48 in the light of stiffness of the tire.

Also in this tire, a great lateral stiffness is achieved by the side ply 40. The tire is excellent in handling stability. This tire does not require a sidewall rubber used in conventional tires. Accordingly, the tire is light and obtained at a low price. To layer the side ply 40 on a carcass is easier than to layer the sidewall rubber on the carcass. This tire is also excellent in productivity. In the conventional tires, a defect is easily caused by a flow of the sidewall rubber at steps of vulcanization and molding. On the other hand, as the flow of the rubber of the side ply 40 is less in the tire according to the present invention, the defect is difficult to be caused. In addition, by restraining the flow of the rubber, labels which are attached on a green tire are prevented from being covered by the rubber 44.

In the light of a lateral stiffness, a fineness of the warp 46 and the weft 48 is preferably equal to or greater than 400 dtex, more preferably equal to or greater than 900 dtex. In the light of a following property to a road surface, the fineness of the warp 46 and the weft 48 is preferably equal to or less than 2500 dtex. In the light of a lateral stiffness, a density of the warp 46 and the weft 48 (the number of the threads per 5 cm of the side ply) is preferably equal to or greater than 10 ends and more preferably equal to or greater than 15 ends. In the light of a following property to a road surface, the density of the warp 46 and the weft 48 is preferably equal to or less than 50 ends.

In the light of a lateral stiffness, a thickness of the side ply 40 is preferably equal to or greater than 0.5 mm and more preferably equal to or greater than 1.0 mm. In the light of lightness in weight, the thickness is preferably equal to or less than 2.0 mm.

Also in this tire, a ratio of a length in the radial direction of the side ply 40 to a height of the tire measured from a bead base line is preferably equal to or greater than 50%, more preferably equal to or greater than 60% and particularly preferably equal to or greater than 70%. The ratio is preferably equal to or less than 90%.

Also in a method of manufacturing this tire, before the side ply 40 and the carcass ply are layered, it is preferred that the rubber 44 of the side ply 40 is in a half vulcanized state by an electron-ray curing method.

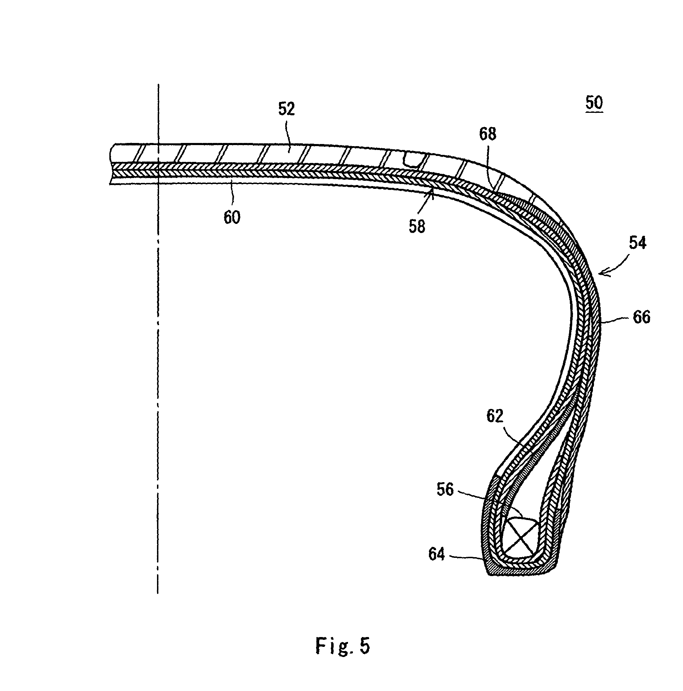

Fig. 5 is a sectional view showing a part of a tire 50 according to a further embodiment of the present invention. The tire 50 has a tread 52, a sidewall 54, a bead 56, a carcass 58, an inner liner 60, a reinforce ply 62 and a chafer 64. The sidewall 54 of the tire 50 is formed by a side ply 66. An upper end 68 of the side ply 66 is located to the inside of the tread 52. In other words, an upper portion of the side ply 66 and the tread 52 are layered. In the tire 50, the structure of the members except for the sidewall 54 is equal to that of the members of the tire 2 shown in Fig. 1.

The structure of the side ply 66 is equal to that of the side ply 20 shown in Fig. 2. The side ply 66 may have the equal structure to the side ply 40 shown in Fig. 4. Also in the tire 50, a great lateral stiffness is achieved by the side ply 66. The tire 50 is excellent in handling stability. This tire 50 does not require a sidewall rubber used in conventional tires. Accordingly, the tire 50 is light and obtained at a low price. To layer the side ply 66 on the carcass 58 is easier than to layer the sidewall rubber on the carcass 58. This tire 50 is also excellent in productivity. In the conventional tires, a defect is easily caused by a flow of the sidewall rubber at steps of vulcanization and molding. On the other hand, as the flow of the rubber of the side ply 66 is less in the tire 50 according to the present invention, the defect is difficult to be caused. In addition, by restraining the flow of the rubber, labels which are attached on a green tire are prevented from being covered by the rubber.

### EXAMPLES

### [Example 1]

A side ply including a cord formed by a nylon fiber with a fineness of 940 dtex/2 was prepared. A density of the cord is 27 ends. The side ply was irradiated with an electron ray so that a topping rubber is half vulcanized. By using this side ply, a tire for a racing kart shown in Figures 1 to 3 was produced. The size of this tire is "10 X 4.50 - 5". In this tire, an angle θ of the cord to the rotation direction is 45 degrees. A ratio of a length L to a height H is 60%.

### [Example 2]

A tire according to the example 2 was obtained in the same manner as in the example 1 except that the angle θ is set as shown in the following table 1.

### [Examples 3, 4 and 6]

A tire according to each of the examples 3, 4 and 6 was obtained in the same manner as in the example 1 except that the ratio of the length L to the height H is set as shown in the following table 1.

### [Example 5]

A tire according to the example 5 was obtained in the same manner as in the example 1 except that the electron irradiation was not carried out.

### [Examples 7 to 9]

A tire according to each of the examples 7 to 9 was obtained in the same manner as in the example 1 except that materials of the cord were set as shown in the following table 2.

### [Example 10]

A tire according to the example 10 was obtained in the same manner as in the example 1 except that a side ply formed by a fabric and a rubber impregnated in the fabric was used. For warps and wefts of the fabric, a nylon fiber with a fineness of 940 dtex/2 is used.

### [Example 11]

A tire according to the example 11 was obtained in the same manner as in the example 1 except that a side ply with a great length L was used. An upper portion of the side ply overlaps with a tread as shown in Fig. 5. A ratio of a length L to a height H is 80%.

### [Comparative Example]

As a comparative example, a tire which is available on the market was prepared. A sidewall of the tire is formed only by a rubber. A thickness of the sidewall is 1.4 mm.

### [Driving Test]

A tire was fitted to a rim of "8.0 X 5" and filled with air to have an internal pressure of 80 kPa. The rim was attached as a rear wheel to a racing kart with an engine displacement of 100 cm³. The kart was driven at a course with an overall length of 1177 m and lap times were measured. A mean value of ten laps made around the course is shown in the following tables 1 and 2.

### [Sensory Evaluation]

The driver who carried out the driving test above evaluated a side grip and traction. The evaluation was made with 5 grades from 1 to 5. The result is shown in the following tables 1 and 2.

**Table 1 Result of Evaluation**

| | | Example 2 | Example 3 | Example 4 | Example 1 | Example 5 | Example 6 |
|---|---|---|---|---|---|---|---|
| Type of tire | | Fig.1 | Fig.1 | Fig.1 | Fig.1 | Fig.1 | Fig.1 |
| Side ply | Type | Cord (Fig. 2) | Cord (Fig. 2) | Cord (Fig.2) | Cord (Fig. 2) | Cord (Fig. 2) | Cord (Fig. 2) |
| | Fiber material | Nylon | Nylon | Nylon | Nylon | Nylon | Nylon |
| | Angle θ (deg.) | 70 | 45 | 45 | 45 | 45 | 45 |
| (L/H) *100 (%) | | 60 | 40 | 50 | 60 | 60 | 70 |
| Electron irradiation | | Yes | Yes | Yes | Yes | No | Yes |
| Lap time (s) | | 43.70 | 43.21 | 43.33 | 44.00 | 44.10 | 44.20 |
| Sensory evaluation | Side grip | 3.1 | 3.3 | 3.2 | 3.2 | 3.2 | 3.2 |
| | Traction | 3.3 | 3.1 | 3.2 | 3.3 | 3.2 | 3.3 |
| Size of spew | | Small | Small | Small | Small | Midium | Small |

**Table 2 Result of Evaluation**

| | | Example 7 | Example 8 | Example 9 | Example 10 | Example 11 | Compara. Example |
|---|---|---|---|---|---|---|---|
| Type of tire | | Fig.1 | Fig.1 | Fig. 1 | Fig.1 | Fig.5 | - |
| Side ply | Type | Cord (Fig.2) | Cord (Fig.2) | Cord (Fig. 2) | Fabric (Fig.4) | Cord (Fig. 2) | - |
| | Fiber material | Polyester | PEN | Aramid | Nylon | Nylon | - |
| | Angle θ (deg.) | 45 | 45 | 45 | - | 45 | - |
| (L/H) *100 (%) | | 60 | 60 | 60 | 60 | 80 | - |
| Electron irradiation | | Yes | Yes | Yes | Yes | Yes | - |
| Lap time (s) | | 42.91 | 42.33 | 42.36 | 43.66 | 44.23 | 44.26 |
| Sensory evaluation | Side grip | 3.2 | 3.3 | 3.3 | 3.3 | 3.2 | 3.0 |
| | Traction | 3.4 | 3.5 | 3.5 | 3.2 | 3.3 | 3.0 |
| Size of spew | | Small | Small | Small | Small | Small | Large |

As shown in the tables 1 and 2, the tire according to each of the examples has a short lap time. In addition, the sensory evaluation of the tire according to each of the examples is high. From the result of the evaluation, the advantages of the present invention are apparent.

The above description is only illustrative and various changes can be made without departing from the scope of the present invention. The tire according to the present invention may be attached to various types of cars, for example, a racing kart, a passenger car and the like.

## Claims

1. A pneumatic tire (2) comprising a tread (4) having an outer surface which forms a tread surface (18), a pair of sidewalls (6) extending almost inwardly in a radial direction from both ends of the tread (4), a pair of beads (8) extending further almost inwardly in the radial direction from the sidewalls (6) and a carcass (10) laid between the beads (8) on both sides along the insides of the tread (4) and the sidewalls (6),
wherein the sidewall (6) is formed by a side ply (20) including a fiber and a rubber which covers the fiber,
**characterized in that**
said side ply (20) is constituted by multiple cords (34) which are formed by said fiber and are all parallel with each other and a topping rubber (36) which covers the cords (34).

2. The tire according to claim 1, wherein said fiber is a polyester fiber, a polyethylene naphthalate fiber, a nylon fiber or an aramid fiber.

3. The tire according to claim 1, wherein a length of said side ply (20) in a radial direction is equal to or greater than 50% of a height of the tire.

4. The tire according to claim 3, wherein said cord (20) is inclined to a rotation direction of the tire.

5. The tire according to claim 4, wherein an angle of inclination of the cord (20) in the sidewall (6) at one side to the rotation direction of the tire is substantially equal to an angle of inclination of the cord (20) in the side wall (6) at the other side to the rotation direction of the tire.

## Patentansprüche

1. Luftreifen (2) mit einer Lauffläche (4), die eine Außenfläche aufweist, die eine Laufflächen-Oberfläche (18) bildet, einem Paar Seitenwänden (6), die sich beinahe nach innen in einer radialen Richtung von beiden Enden der Lauffläche (4) erstrecken, einem Paar Wülsten (8), die sich weiter beinahe nach innen in der radialen Richtung von den Seitenwänden (6) erstrecken, und einer Karkasse (10), die zwischen die Wülste (8) auf beiden Seiten entlang der Innenseiten der Lauffläche (4) und der Seitenwände (6) gelegt ist,
wobei die Seitenwand (6) durch eine Seitenlage (20) gebildet ist, die eine Faser und einen Kautschuk, der die Faser bedeckt, umfasst,
**dadurch gekennzeichnet, dass**
die Seitenlage (20) aus mehreren Korden (34), die durch die Faser gebildet sind und alle parallel zueinander liegen, und einem Gummierungskautschuk (36), der die Korde (34) bedeckt, gebildet ist.

2. Reifen nach Anspruch 1, wobei
die Faser eine Polyesterfaser, eine Polyethylennaphthalatfaser, eine Nylonfaser oder eine Aramidfaser ist.

3. Reifen nach Anspruch 1, wobei
eine Länge der Seitenlage (20) in einer radialen Richtung gleich oder größer als 50 % einer Höhe des Reifens ist.

4. Reifen nach Anspruch 3, wobei
der Kord (20) zu einer Drehrichtung des Reifens geneigt ist.

5. Reifen nach Anspruch 4, wobei
ein Neigungswinkel des Kords (20) in der Seitenwand (6) auf einer Seite zu der Drehrichtung des Reifens im Wesentlichen gleich einem Neigungswinkel des Kords (20) in der Seitenwand (6) auf der anderen Seite zu der Drehrichtung des Reifens ist.

## Revendications

1. Bandage pneumatique (2) comprenant une bande de roulement (4) ayant une surface extérieure qui forme une surface de roulement (18), une paire de parois latérales (6) s'étendant presque vers l'intérieur dans une direction radiale depuis les deux extrémités de la bande de roulement (4), une paire de talons (8) qui s'étendent plus loin presque vers l'intérieur dans la direction radiale depuis les parois latérales (6), et une carcasse (10) posée entre les talons (8) sur les deux côtés le long de l'intérieur de la bande de roulement (4) et des parois latérales (6),
dans lequel la paroi latérale (6) est formée par une nappe latérale (20) qui inclut des fibres et un caoutchouc qui couvre les fibres,
**caractérisé en ce que**
ladite nappe latérale (20) est constituée par des câblés multiples (34) qui sont formés par lesdites fibres et qui sont tous parallèles les uns aux autres, et par un caoutchouc d'enrobage (36) qui couvre les câblés (34).

2. Pneumatique selon la revendication 1, dans lequel lesdites fibres sont des fibres polyester, des fibres en polyéthylène naphtalate, des fibres en nylon, ou des fibres aramides.

3. Pneumatique selon la revendication 1, dans lequel une longueur de ladite nappe latérale (20) en direction radiale est égale ou supérieure à 50 % de la hauteur du pneumatique.

4. Pneumatique selon la revendication 3, dans lequel ledit câblé (20) est incliné par rapport à une direction de rotation du pneumatique.

5. Pneumatique selon la revendication 4, dans lequel un angle d'inclinaison du câblé (20) dans la paroi latérale (6) sur un côté de la direction de rotation du pneumatique est sensiblement égal à un angle d'inclinaison du câblé (20) dans la paroi latérale (6) sur l'autre côté par rapport à la direction de rotation du pneumatique.
